# FASCICULE DE BREVET EUROPEEN

(11) **EP 1 833 785 B1**
(45) Date de publication et mention de la délivrance du brevet: **23.10.2013**
(21) Numéro de dépôt: 05850543.9
(22) Date de dépôt: 20.12.2005
(51) Int. Cl.: C07C 263/18, C08G 18/06, C09D 175/04, C07F 7/10, C07F 7/18

(54) **COMPOSITIONS ISOCYANATES PRESENTANT DE BONNES PROPRIETES DE MELANGE ET UTILISATION DE DERIVES SILYLES COMME ADJUVANTS DE COMPOSITIONS ISOCYANATES, NOTAMMENT DE MELANGE**
ZUSAMMENSETZUNGEN MIT GUTEN MISCHEIGENSCHAFTEN UND VERWENDUNG VON SILYLDERIVATEN ALS ISOCYANAT-ZUSÄTZE, IM BESONDEREN EINER ISOCYANAT-MISCHUNG
COMPOSITIONS EXHIBITING GOOD MIXING PROPERTIES AND USE OF SILYL DERIVATIVES AS ISOCYANATE ADDITIVES, IN PARTICULAR OF ISOCYANATE MIXTURE

(30) Priorité: 23.12.2004 FR 0413847
(43) Date de publication de la demande: 19.09.2007
(73) Titulaire: Vencorex France, 69800 Saint-Priest (FR)
(72) Inventeur: BERNARD, Jean-marie, Alphonse, Etienne, F-69440 Saint-Laurent D'Agny (FR); BARBEAU, Philippe, F-69740 Genas (FR)
(74) Mandataire: Colombet, Alain André
(86) Numéro de dépôt international: PCT/FR2005/003194
(87) Numéro de publication internationale: WO 2006/070100

(56) Documents cités:
- EP-A- 0 246 170
- EP-A- 0 765 893
- US-A- 3 598 852

## Description

La présente invention vise des compositions isocyanates présentant de bonnes propriétés de mélange. Elle porte plus particulièrement sur l'utilisation de dérivés silylés comme adjuvants, notamment de mélanges, et ce en particulier pour améliorer la compatibilité des compositions isocyanates avec les différents solvants utilisés dans le domaine de la réticulation, notamment lorsque de tels matériaux sont utilisés comme composants de revêtements, notamment peintures [plus particulièrement liant(s) de peintures et vernis] et adhésifs.

Pour replacer la présente invention dans le contexte industriel et sémantique, il convient de procéder à un certain nombre de rappels et de préciser ou remémorer un certain nombre de définitions.

Sauf si cela est précisé autrement, les conditions de mesure sont celles des CNA (conditions normales ambiantes, à savoir température θ = 25°C ; pression P = 10⁵ Pau). On peut en outre rappeler que dans le domaine des peintures et notamment des isocyanates, les viscosités données correspondent à une mesure dans les conditions normales ambiantes (à savoir θ = 25°C ; P=10⁵ Pau), réalisée selon la norme NF EN ISO 3219 de novembre 1994 (Méthode de détermination de la viscosité par la méthode du cylindre tournant).

Dans leur majorité, les compositions polyisocyanates sont le plus souvent formées de dérivés issus d'oligocondensation de molécule(s) unitaire(s) di-, tri, voire tétra isocyanate.

Un tel type de molécule est qualifié de "monomères" et est susceptible d'être obtenu par phosgénation d'une diamine primaire, éventuellement porteuse d'une, voire de deux autres fonctions amine primaire. Ainsi, une telle molécule contient un motif constitué d'une chaîne carbonée porteuse d'au moins deux azotes (provenant de la diamine à phosgéner), motif que l'on désignera par "motif di-amino" dans la suite de la description. Le motif di-amino sert ici de vestige, ou de trace, de l'existence passée ou présente d'un monomère isocyanate : ainsi le motif di-amino est de structure :

>N-R-N<

où R représente un radical hydrocarboné, évidemment divalent, qui est le reste d'un monomère isocyanate après ignorance de deux fonctions isocyanates. Bien entendu, R ne présente aucune des fonctions créées lors de l'oligomérisation d'une fonction isocyanate, à savoir les fonctions carbamates, urées (y compris biuret), allophanates et celles qui sont mentionnées ci-après à l'occasion de la description des oligocondensations (y compris oligomérisation). La masse moléculaire de -R- est, d'une part, au moins égale à 50 ; avantageusement à 80 et, d'autre part, au plus égale à 250, avantageusement 200, plus couramment à 150. R peut parfois comporter un autre, voire deux autres groupes "amino" primaires (lequel aura été phosgéné lors de l'étape de transformation des fonctions amines primaires). C'est le cas des monomères trifonctionnels comme le LTI, le NTI et l'UTI (ou Unti).

Les signes "amino", N< et >N signifient que l'azote peut être engagé dans toute fonction isocyanate ou en dérivant, telle que fonction isocyanate, amine, amide, imide, urée (y compris biuret et acylurées) et notamment les fonctions engendrées par les réactions d'oligomérisation.

Ces motifs di-amino se retrouvent dans la quasi-totalité des oligocondensations et dans l'immense majorité des transformations des fonctions isocyanates. Cette constatation permet de faire référence au nombre de motifs di-amino pour indiquer notamment l'état de condensation des monomères et des oligocondensats (y compris oligomères), voire des polycondensats, et même en cas d'hétérocondensats (auquel cas on pourra avoir plusieurs types de motifs di-amino).

Selon l'usage courant en chimie, lorsqu'une fonction a donné son nom à une famille de composés (en d'autres termes quand une fonction sert d'éponyme à une famille de produits, comme c'est le cas pour les isocyanates), on définit le caractère aromatique ou aliphatique selon le point d'attache de la fonction considérée. Lorsqu'un isocyanate est situé sur un carbone de nature aliphatique, alors on considère que le composé isocyanate est lui-même de nature aliphatique. De même, lorsqu'une fonction isocyanate est rattachée au squelette par l'intermédiaire d'un carbone de nature aromatique, alors on désignera l'ensemble du monomère par l'expression isocyanate aromatique.

Pour expliciter ce point on peut rappeler que :
- on considère comme aromatique, toute fonction isocyanate dont le point d'attache (de l'azote bien sûr) est un maillon d'un cycle aromatique ;.
- on considère comme aliphatique, toute fonction isocyanate dont le point d'attache (de l'azote bien sûr) est un carbone d'hybridation sp³.

Parmi les isocyanates aliphatiques, on peut faire les distinctions ou établir les sous-catégories qui suivent :
- on considère comme cycloaliphatique, toute fonction isocyanate aliphatique dont le point d'attache est distant d'un cycle le plus proche d'au plus un carbone (de préférence, le point d'attache est sur le cycle même) ;
- on considère comme secondaire, toute fonction isocyanate dont le point d'attache est porté par un carbone sp³ secondaire (c'est-à-dire un carbone relié à deux carbones et à un hydrogène) ;
- on considère comme tertiaire, toute fonction isocyanate dont le point d'attache est porté par un carbone sp³ tertiaire (c'est-à-dire un carbone relié à trois carbones) ;
- on considère comme néopentylique, toute fonction isocyanate dont le point d'attache est porté par un carbone sp³, lui-même porté par un carbone tertiaire (c'est-à-dire compte non tenu de la dernière liaison, un carbone relié à trois carbones) ;
- on considère comme primaire, toute fonction isocyanate dont le point d'attache est porté par un méthylène sensu stricto (-CH₂-) ;
- on considère comme linéaire, toute fonction isocyanate dont le point d'attache est porté par un méthylène sensu stricto (-CH₂-), lui-même porté par un carbone sp³ exocyclique et non tertiaire.

En ce qui concerne les monomères, la répartition par catégorie peut se faire facilement de la manière suivante :
Ainsi, est réputé :
   - aliphatique tout monomère dont toutes les fonctions isocyanates sont aliphatiques ;
   - aromatique tout monomère dont toutes les fonctions isocyanates sont aromatiques ;
   - mixte tout monomère dont une fonction au moins est aliphatique et dont une fonction au moins est aromatique ;
   - cycloaliphatique tout monomère dont toutes les fonctions isocyanates sont aliphatiques et dont une au moins est cycloaliphatique ;
   - aliphatique linéaire tout monomère dont toutes les fonctions isocyanates sont aliphatiques, dont aucune n'est cycloaliphatique et soit dont une au moins est linéaire, soit qui présente au moins un enchaînement polyméthylène, libre en rotation, et donc exocyclique, (CH₂)_{π} où π représente un entier au moins égal à 2.

Si l'on détaille un peu plus, les isocyanates monomères peuvent être :
◆ aliphatiques, y compris cycloaliphatiques et arylaliphatiques (ou araliphatiques), tels que :
   - comme aliphatique linéaire (ou simple), les polyméthylène-diisocyanates monomères qui présentent un ou des enchaînements polyméthylènes exocycliques (CH₂)_{π} où π représente un entier de 2 à 10, avantageusement de 4 à 8 et notamment l'hexaméthylènediisocyanate, l'un des méthylènes pouvant être substitué par un radical méthyle ou éthyle comme c'est le cas du MPDI (méthylpentaméthylènediisocyanate) ;
   - comme aliphatique cyclique (ou cycloaliphatique), partiellement "néopentylique" et cycloaliphatique ; par exemple l'isophorone-diisocyanate (IPDI) ;
   - comme aliphatique cyclique (cycloaliphatique) diisocyanate, ceux dérivés du norbornane ou les formes hydrogénées (hydrogénation du noyau des arylènediamines conduisant à un cycle diaminé ensuite soumis à une isocyanatation, par exemple par phosgénation) des isocyanates aromatiques, donnant par exemple le 1,3 ou le 1,4 BIC (BislsocyanatométhylCyclohexane) ;
   - comme araliphatiques les monomères (tels que OCN-CH₂-Φ-CH₂-NCO ; dont une partie est réputée aliphatique linéaire, à savoir ceux dont la fonction isocyanate est distante des noyaux aromatiques d'au moins deux carbones tels que (OCN-[CH₂]ₜ-Φ-[CH₂]ᵤ-NCO) avec t et u supérieur à 1 ;
◆ au encore aromatiques, tels que le toluylènediisocyanate mentionné ici pour mémoire.

D'une manière générale et préférée, la masse moléculaire d'un monomère ne dépasse pas 300 et est au moins égale à 100.

Selon la présente invention, il est souhaitable que les monomères aliphatiques linéaires soient utilisés au moins en partie pour la mise en oeuvre de la présente invention, aussi peut-on ajouter à ceux qui sont mentionnés ci-dessus le NTI (NonylTri-Isocyanate OCN-(CH₂)₄-CH(CH₂-NCO)-(CH₂)₃-NCO), l'UTI (Undécyle Tri-Isocyanate OCN-(CH₂)₅-CH(-NCO)-(CH₂)₅-NCO).

Dans le cadre de la présente invention, on ne vise pas comme monomère et comme motif qui en sont issus les dérivés d'acide aminé et notamment de la lysine, notamment la LDI (Lysine Di-Isocyanate, issue d'ester de la lysine), la LTI (lysine tri-isocyanate, issue de l'ester de la lysine avec l'éthanolamine).

La plupart de ces monomères ont une tension de vapeur trop élevée pour répondre aux contraintes réglementaires relatives à la sécurité du travail. Aussi alourdit-t-on ces molécules en les oligocondensant (hétéro- et homocondensation).

Ces condensations mettent en jeu les fonctions isocyanates. Les "monomères" étant polyfonctionnels en isocyanate, ces condensations pourront avoir lieu sur deux ou plusieurs fonctions isocyanates d'une même molécule. Il s'ensuit que ces réactions pourront conduire à des oligomères plus ou moins lourds selon le taux de transformation des isocyanates.

On rappellera ci-après les principaux oligocondensats :
Les dérivés obtenus par "trimérisation", c'est-à-dire que l'on condense trois fonctions isocyanates appartenant à trois molécules différentes pour former un cycle isocyanurique porteur de trois groupes, eux-mêmes le plus souvent porteurs d'une fonction isocyanate (un étant ici l'article indéfini et non le nombre cardinal, si l'on veut faire appel au cardinal il convient alors de comprendre « au moins un »).

On peut rappeler les principaux motifs, fonctions ou cycles susceptibles de se former à l'occasion de la trimérisation :

| | | |
|---|---|---|
| 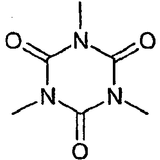 | 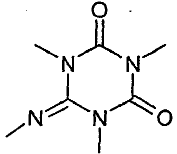 | |
| cycle isocyanurique, alias trimère, et qualifié de "trimère vrai" lorsque la molécule ne comporte que trois motifs diamine | cycle 4,6-dioxo-2-imino-hexahydro -1,3,5-triazine alias iminotrimère : il sagit d'un tétracondensat issu de quatre fonctions isocyanate, avec l'élimination d'un bioxyde de carbone | |
| 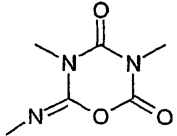 | 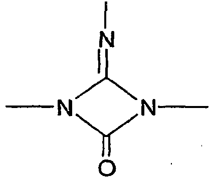 | 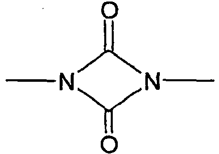 |
| cycle iminooxadiazinedione, alias trimère asymétrique, aurait des propriétés deviscosantes | 2-imino-4-oxo-1,3-diazétidine alias imino dimère, issu de trois fonctions isocyanate, avec l'élimination d'un bioxyde de carbone | uretidine-dione alias dimère |

Une autre manière d'alourdir la molécule est de les condenser les unes sur les autres en présence d'eau pour former une fonction dérivée porteuse de trois fonctions isocyanates que l'on désigne sous l'expression de fonction biuret, ou de « biuret ». La réaction ci-après montre la réaction dans le cas le plus fréquent, c'est-à-dire le cas où les trois molécules à condenser sont les mêmes :

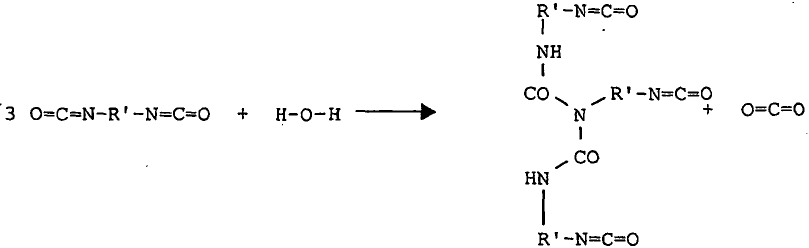

On peut également obtenir de telle structure à partir d'amine porteuse d'au moins un hydrogène, voir infra.

On peut également condenser ces monomères sur des alcools, notamment des polyols, ce qui donne des composés polyfonctionnels, carbamates puis allophanates.

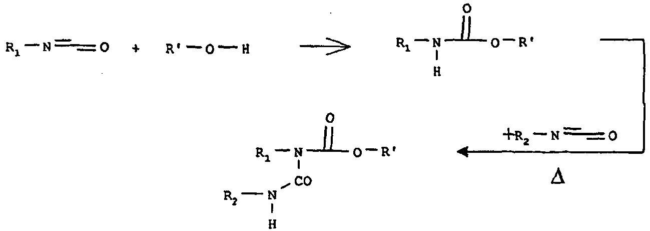

Ce type d'hétérocondensation est très général et correspond pour l'essentiel à des condensations avec des porteurs de fonction à hydrogène mobile voir infra et au livre : « Methoden der organischen Chemie Kohlenssäure Derivat heraus gegeben von Hermann Hagemann, 1983, Houbenweil - Georg Thieme Verlag Stuttgart

Dans les compositions polyisocyanates, le plus souvent l'on trouve, à côté des polycondensats majoritaires, des quantités mineures de divers types de condensation.

Les compositions polyisocyanates qui viennent d'être décrites sont en général utilisées comme réticulant, notamment dans le domaine des peintures, vernis et adhésifs.

Les co-réactifs de ces isocyanates sont des composés polyfonctionnels à base de fonctions à hydrogène mobile (voir ci-après).

En général, ces composés polyfonctionnels sont des composés comportant de nombreuses fonctions, telles que alcool, thiol et/ou amine, voire acide carboxylique, le plus souvent ce sont des polyols.

La fonctionnalité moyenne en nombre de ces composés polyfonctionnels est extrêmement variable selon ce que l'on désire obtenir. Elle varie en général de 2 à environ 20, voire 30, et même 40, plus généralement de 3 à environ 20 ; allant fréquemment de 4 à 15, souvent entre 5 et 10. Bien sûr, les nombres précédents sont des valeurs arrondies à l'unité la plus proche (règle de l'arrondi mathématique) ; en effet la valeur peut-être fractionnaire puisque cette fonctionnalité en nombre peut être obtenue en multipliant la fonctionnalité massique exprimée en équivalent par gramme, par la masse moléculaire en nombre (Mₙ).

Les fonctions à hydrogène mobile les plus courantes sont celles qui sont exposées ci-après. Le plus souvent les teneurs en fonction à hydrogène mobile sont données en indice (d'alcool, d'acide, ...), ce qui correspond à une équivalence en potasse ; dans ce cas pour avoir le nombre de fonctions par gramme il suffit de diviser l'indice exprimé par gramme par la masse de la potasse, c'est-à-dire par 56 (deux chiffres significatifs). La teneur en fonction à hydrogène mobile peut être exprimée en pourcentage massique de la fonction (par exemple masse de la fonction ol 17, amine primaire 16, thiol 33, acide carboxylique 45, ...).

De telles fonctions à hydrogène mobile (notées ci-après Ψ-H) présentent un hydrogène qualifié de mobile et sont telles que la réaction de l'équation (C1) suivante a lieu, éventuellement suivie de la réaction de l'équation (C2) :

-L-Ψ-H + OCN- -----→ -L-Ψ-C(O)-N(H)- (C1)

-L-Ψ-C(O)-N(H)- + OCN- → -L-Ψ-C(O)-N(C(O)-N(H)-)- (C2)

- où L représente le lien avec le reste de la molécule ;
- où Ψ représente un chalcogène, (avantageusement oxygène ou soufre) ou un atome trivalent d'azote ou de phosphore, voire d'arsenic et même d'antimoine. Ψ peut également représenter un carbone porteur d'un hydrogène rendu mobile par un ou plusieurs groupes électrons attracteurs et dont un exemple est le carbone malonique.

Dans le cas où l'hydrogène, en particulier de l'hydroxyle, est acide (pKa au plus égal à 6, le plus souvent à 5), une réaction ultérieure de décarboxylation peut avoir lieu. Ainsi les fonctions carboxyliques peuvent donner quant à elles des acylurées (en effet la séquence réactionnelle la plus courante est la suivante : l'addition de l'isocyanate conduit à l'anhydride d'acide dissymétrique de l'acide carboxylique et de l'acide carbamique correspondant à l'isocyanate ; cet anhydride se décompose [voir réaction (C3)] dans le cas où psi (Ψ) est oxygène, il se décarboxyle) pour donner l'amide dudit acide carboxylique et de l'amine correspondant à l'isocyanate. 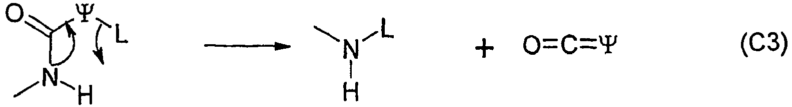 Une seconde fonction isocyanate peut alors réagir sur l'amide (équation de type C 2 pour donner une acylurée). Cette réaction explique la formation d'urée lors de l'addition d'eau à de l'isocyanate, la réaction C2 donne alors du biuret.

Ψ peut également représenter un atome d'azote porteur d'un hydrogène ou d'un radical hydrocarboné (c'est-à-dire comportant de l'hydrogène et du carbone) d'au plus 15 atomes de carbone, mais dans ce cas la réaction (3) n'a pas lieu.

L est avantageusement choisi parmi la liaison simple (-), les groupes carbonyle [-C(=O)-, y compris NH₂ -C(=O)], les groupes de type imino (>C=N- et -C(=N-)- [par exemple pour former des amidines, amidoximes (-C(=N-O-H)-NH₂) ou une forme conjuguée des amides]).

Ces fonctions sont bien connues de l'homme du métier et parmi ces dernières, on peut citer les fonctions à groupe amino (où Ψ représente >N-), qui, outre les amines et anilines, comprennent les amides [où Ψ est précédé par un groupe carbonyle pour donner -C(=O)-N<] avec, comme cas particuliers, les lactames et les urées, les fonctions à groupe hydroxyle [où Ψ représente -O-] qui, outre les fonctions alcools, y inclus les phénols, comprennent les fonctions oximes [où Ψ est précédé par un groupe imino pour donner =N-O-] acide oxygéné de pKa au moins égal à 1, avantageusement égal à 2, de préférence à 3, en particulier les fonctions acide carboxylique [où Ψ est précédé par un groupe carbonyle pour donner -C(=O)-O-] et les fonctions thiols.

La signification de certains termes usuels est rappelée ci-dessous :
- Bis-Dimère : oligomère issu de la condensation de trois monomères et présentant deux motifs urétidinedione ;
- Tris-Dimère : tétramère à trois motifs urétidinedione ;
- Bis-Trimère : pentamère à deux motifs isocyanurate ;
- Trimère-Dimère : tétramère à un motif isocyanurate et à un motif urétidinedione ;
- Trimère-Dimère-Trimère : hexamère à deux motifs isocyanurate et à un motif urétidinedione.
- Dans le cas d'une homocondensation, Les « lourds » correspondent aux oligomères ayant une masse moléculaire égale ou supérieure à 7 fois celle du monomère utilisé.
- Dans le cas d'une hétéro-oligocondention (notamment hétéro-oligomérisation), les « lourds » correspondent
   o Dans le cas d'un hetéro-oligoméristion (condensation de deux, ou plus, monomères isocyanate) aux oligocondensats, y compris les oligomères ayant au moins sept motifs diamino tels que définis précédemment, et statistiquement une masse moléculaire égale ou supérieure à 7 fois celle des monomères utilisés, pondérés par leur proportions molaires respectives : en d'autres termes, la masse à prendre en compte est la somme des masses moléculaires de chaque monomère multipliée par le pourcentage molaire respectif ;
   o Dans le cas d'une hétérocondensation (mettant en jeu des composés isocyanates et des composés à hydrogène mobile), aux oligocondensants présentant une masse moléculaire égale ou supérieure à 7 fois celle des monomères utilisés pondérés par leurs proportions molaires respectives : (en d'autres termes, la masse de la somme des masses moléculaires de chaque monomère multipliée par le pourcentage molaire).

Le titre NCO est mesuré, de manière habituelle, selon la norme AFNOR NF T 52-132 de septembre 1988 (parfois désigné par méthode à la dibutylamine).

La détermination de la masse moléculaire moyenne est réalisée selon la méthode usuelle en matière d'isocyanate ; la composition oligomérique est soumise à une technique de séparation oligomérique, telle que séparation chromatographique par perméation de gel ; on obtient de cette façon plusieurs fractions oligomériques dont les différents composants seront identifiés par analyse structurale, surtout infrarouge (éventuellement complétée par d'autres techniques connues dans le domaine, telle la RMN).

Dans un second temps, la répartition et la fonctionnalité de ces composants sont déterminées, le plus souvent en utilisant leurs propriétés spectrales, notamment les bandes caractéristiques des composés polyisocyanates, telles que les bandes des fonctions isocyanates et des fonctions (bien sûr, y compris cycles) qui en sont issues. Ainsi les bandes alkyles, les bandes CO des fonctions de condensation telles que l'isocyanurate uréthanne, allophanate et l'urétidinedione, sont largement utilisées pour ce faire. On a ainsi accès à une répartition oligomérique pondérale correspondant à chaque synthèse exemplifiée.

On mesure pour chaque fraction oligomérique, pour chaque oligomère isolé, une fonctionnalité globale exprimée par la teneur en fonction NCO (pourcentage massique ou équivalent par gramme) qui, par comparaison avec les valeurs théoriques des oligomères purs, peut donner une excellente indication sur la structure et sur la répartition des composants d'une fraction oligomérique (ainsi dans le cas d'une fraction oligomérique correspondant à une trimérisation, le fait que le bisdimère de HDI ait une fonctionnalité de 2 et une teneur massique en isocyanate de 16,67%, alors que le trimère vrai présente une fonctionnalité de 3 et une teneur massique de 25%, permet de se faire une idée précise de la répartition entre ces deux isomères dès lors que l'on connaît la teneur en isocyanate de la fraction oligomérique correspondant à un trimère).

Rappelons que dans le domaine, la fonctionnalité moyenne est obtenue de la manière suivante : on multiplie le pourcentage pondéral de chaque oligomère, ou chaque fraction oligomérique, de la composition par sa fonctionnalité propre puis on somme les fonctionnalités apportées par chaque oligomère. Le total représente la fonctionnalité moyenne de la composition oligomérique. Dans le cas de la présente invention, les compositions finales sont soumises à une séparation sur un ensemble de colonnes de perméation de gel vendues par la société Polymer Laboratories sous la marque PL Gel type mixte E.

Cette réaction de réticulation par action des fonctions isocyanates sur les co-réactifs à hydrogène mobile dont il a été fait mention ci-dessus est en général réalisée dans des solvants, et ce bien que la quantité de solvant ait significativement été réduite au cours des derniers lustres, en raison des réglementations de plus en plus strictes sur les solvants.

Les différents coréactifs, les différents éléments d'addition et surtout les différents solvants peuvent comporter des impuretés qui donnent des réactions nuisibles avec les polyisocyanates.

Parmi ces impuretés, celles qui présentent des fonctions à hydrogène mobile sont susceptibles d'être nuisibles, l'une des impuretés gênantes étant l'eau contenue dans les éléments d'addition et dans les solvants.

Dans le dernier cas, cela est particulièrement net dans les solvants polaires (voir le Vogel's textbook of production organic 5^{ème} édition Amedis 5, page 1442). Le problème est net pour les solvants dont l'indice donneur est au moins égal à 5 et encore plus net pour ceux dont l'indice donneur est au moins égal à 10.

Les solvants susceptibles de dissoudre au moins 0,5% en masse d'eau dans les CNA (conditions normales ambiantes, à savoir 25°C ; 10⁵ Pa) et plus encore ceux susceptibles de dissoudre 1%, surtout ceux susceptibles de dissoudre au moins 2%, sont particulièrement atteints par cette problématique.

Les réactions d'hydrolyse sont particulièrement néfastes lorsque l'eau est dissoute dans un élément d'addition et surtout dans un solvant. De surcroît le titre en fonction isocyanate diminue. En effet, tout se passe comme si l'accès aux fonctions isocyanates était favorisé par l'existence de tiers solvants entre l'eau et les isocyanates.

Cette réaction d'hydrolyse est gênante à double titre, d'une part, il y a un dégagement de gaz carbonique et, d'autre part, un risque de formation d'urée.

Parmi les équations que l'on peut envisager, les plus plausibles sont détaillées ci-dessous mais elles ne constituent qu'une possibilité.

### Hydrolyse

La réaction H1 ci-après est une absorption de l'eau par la fonction isocyanate, la réaction désignée par H2 (voir ci-après) conduit à la formation de gaz carbonique et l'équation H3 conduit à la formation d'urée qui provoque des troubles et peut constituer une gêne pour les éventuels revêtements.

C'est la raison pour laquelle il convient de trouver une technique qui permet d'éviter soit l'équation n°H1, soit l'équation n°H2 de ces réactions d'hydrolyse.

La réaction H3 ci-après constitue la première étape d'un processus qui d'une part, augmente la viscosité et, d'autre part, conduit à une fonction biuret.

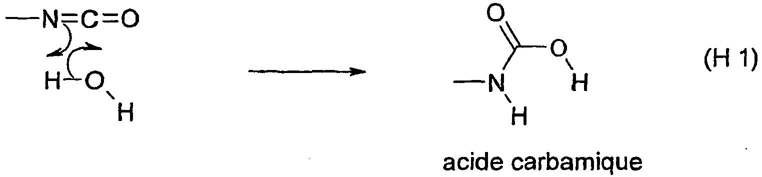

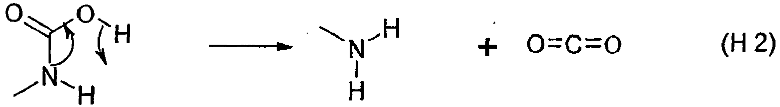

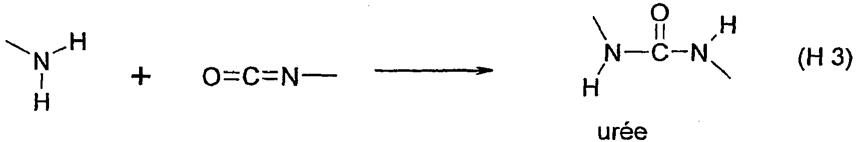

Le dégagement de gaz carbonique est un inconvénient supplémentaire dans le stockage car s'il y a prise d'humidité des compositions isocyanates, alors il y a un risque de surpression, voire d'explosion des récipients contenant les compositions isocyanates.

L'appel aux déshydratants usuels est insuffisant, car la fonction isocyanate est elle-même extrêmement avide d'eau et est fréquemment utilisée comme absorbeur d'eau.

C'est pourquoi un des buts de la présente invention est de trouver un réactif qui soit susceptible de prévenir la formation de gaz carbonique et la formation d'urée insoluble, par action de l'humidité contenue, ou potentiellement contenue, dans des composants mal déshydratés sur les fonctions isocyanates.

Un autre but de la présente invention est de fournir une technique qui soit utilisable pour les fonctions isocyanates de nature aliphatique. Et donc pour les monomères aliphatiques, leurs mélanges, et même pour le mélange de monomères aliphatiques et aromatiques

Un autre but de la présente invention est de fournir une technique qui permette de faciliter le mélange des compositions isocyanates avec les solvants de qualité courante non préconisé pour l'utilisation avec des isocyanates et non préalablement déshydratés, et ce sans que cela nuise à la stockabilité desdites compositions isocyanates, notamment celles obtenues après, ou par, mélange avec un solvant de nature hygroscopique.

Un autre but de la présente invention est de fournir des compositions isocyanates présentant une bonne résistance à l'humidité et permettant ipso facto de subir sans dommage une fréquente ouverture et fermeture du récipient contenant lesdits isocyanates et sans que cela n'implique la prise de précautions contraignantes (comme c'est notamment le cas dans l'activité de peinture après réparation automobile).

Il est décrit une composition caractérisée par le fait qu'elle comporte pour addition successive ou simultanée :
une sous-composition isocyanate :
   - ne comportant en masse qu'au plus 5%, avantageusement qu'au plus 2%, de préférence qu'au plus 1%, plus préférentiellement au plus 0,5% de monomères porteurs d'au plus deux fonctions isocyanates et/ou de monomères issus d'acides aminés et
   - comportant une teneur en fonction isocyanate au plus égale à 50%, avantageusement à 40% (massique MM de NCO = 42) ;
   - caractérisée par le fait qu'elle comporte en outre au moins un composé choisi parmi les composés porteurs de groupe(s) dihydrocarbylsilylène(s) [-(Hc)₂Si-], voire de groupe(s) hydrocarbyl(hydrocarbyloxy)silylène(s) [-(Hc)(Hc-O-)Si-], attachés à un métalloïde de la colonne des chalcogènes ou de la colonne de l'azote, la teneur en de tel(s) groupe(s) étant au moins égale à 0,1‰ (massique), avantageusement au moins à 1‰ et au plus à 3% exprimé en masse d'atome de silicium (M.A. = 28,1) répondant à la définition par rapport à la quantité de monomères correspondant aux motifs qui en sont issus.
      Les formules [-(Hc)₂Si-] hydrocarbyl(hydrocarbyloxy)silyléne [-(Hc)(Hc-O-)Si-] peuvent s'écrire de la manière commune suivante [-(Hc)(Hc-{O}ᵥ-)Si-], avec v ayant pour valeur zéro ou un (cardinal). Dans cette formule les deux Hc peuvent être identiques ou différents.
      La valeur de v préférée est zéro.
      La présente invention concerne une composition selon la revendication 1.
      Bien entendu, bien que cela ne soit pas préféré, ladite sous-composition peut être utilisée avec des déshydratants usuels.

Avantageusement lesdits groupes dihydrocarbylsilylène [-(H_{C})₂Si-] sont des radicaux tri hydrocarbylsilyle [(Hc)₃Si-].

Ainsi, la teneur en atomes de silicium visée ci-dessus, doit être comprise comme la masse d'atomes de silicium qui répondent à la double contrainte d'être, d'une part, partie d'un motif silylène et, d'autre part, d'être reliée à un atome de chalcogène (au sens large comportant notamment oxygène soufre sélénium) ou à un atome de la colonne V du tableau périodique de Mendeleïev, à savoir la colonne de l'azote par rapport à la quantité de monomères correspondant aux motifs qui en sont issus.

En outre, ces atomes de chalcogène ou de colonne V doivent être des métalloïdes, ce qui exclut les éléments les plus lourds de la colonne des chalcogènes et de la colonne V.

Dans la formule ci-dessus, le ou les Hc représente(nt) des groupes hydrocarbyles (c'est-à-dire comportant à la fois de l'hydrogène et du carbone, lesquels groupes hydrocarbyles peuvent être les mêmes ou différents ; l'atome reliant le radical Hc au reste de la molécule étant un atome de carbone). Ces groupes hydrocarbyles notés Hc présentent avantageusement une masse relativement faible pour éviter de ne constituer une trop grande part massique des compositions isocyanates, tout en ayant une capacité à la stabilisation, voire à la dessiccation importante.

Ainsi, il est souhaitable que Hc présente au plus 15 atomes de carbone, avantageusement au plus 10 atomes de carbone, de préférence au plus 6, plus préférentiellement au plus 4.

Les hydrocarbyles sont notamment choisis parmi les aryles et les alcoyles. Dans ce dernier cas, ils représentent avantageusement les groupes méthyle, éthyle, propyles, voire butyle.

Le terme alcoyle, qui englobe les aralcoyles, est pris dans son sens étymologique d'un alco-ol dont on a enlevé la fonction ol (c'est-à-dire hydroxyle [-OH]). Il s'agit donc d'un radical dont la liaison ouverte est portée par un carbone sp³, lui-même uniquement porteur de liaisons carbone-hydrogène ou carbone-carbone.

Les groupes dihydrocarbylsilylène [-(Hc)₂Si-], voire groupe(s) hydrocarbyl(hydrocarbyloxy)silylène(s) [-(Hc)(Hc-O-)Si-], sont divalents et il est hautement souhaitable que l'une au moins des deux liaisons non spécifiées soit attachée à un métalloïde choisi parmi ceux de la colonne des chalcogènes (surtout soufre ou oxygène), avantageusement parmi ceux de la colonne de l'azote, de préférence azote, voire phosphore). Ces groupes dihydrocarbylsilylène [-(Hc)₂Si-] peuvent également être tels que les deux liaisons non spécifiées dans la formule [-(Hc)₂Si-] soient reliées chacune à un métalloïde identique ou différent choisi parmi ceux de la colonne des chalcogènes (surtout soufre ou oxygène), avantageusement parmi ceux de la colonne de l'azote, de préférence azote, voire phosphore).

Ces groupes dihydrocarbylsilylène [-(Hc)₂Si-] appartiennent avantageusement des radicaux siloxanyle (siloxane dont une liaison avec le silicium reste libre), silazanyle (silazane dont une liaison avec le silicium reste libre), silanyle, notamment trihydrocarbylsilyle [-Si(Hc)₃] (c'est-à-dire dans l'acception de la présente description, un silanyle ne comportant qu'un seul silicium) avec les valeurs générales et préférées mentionnées ci-dessus.

Plus spécifiquement les groupes dihydrocarbylsilylène sont de forme [-(Hc)(Hc')Si-] et les trihydrocarbylsilyles sont de forme [-Si(Hc) (Hc') (Hc")] ; avec :
- Hc représente indépendamment un groupe hydrocarbyle (c'est-à-dire comportant à la fois de l'hydrogène et du carbone) d'au plus 15 atomes de carbone, avantageusement au plus 10 atomes de carbone, de préférence au plus 6, plus préférentiellement au plus 4. Les hydrocarbyles sont notamment choisis parmi les aryles et les alcoyles. Dans ce dernier cas ils représentent avantageusement les groupes méthyle, éthyle, propyle, voire butyle ;
- Hc' représente indépendamment un groupe hydrocarbyle (c'est-à-dire comportant à la fois de l'hydrogène et du carbone) d'au plus 15 atomes de carbone, avantageusement au plus 10 atomes de carbone, de préférence au plus 6, plus préférentiellement au plus 4. Les hydrocarbyles sont notamment choisis parmi les aryles et les alcoyles. Dans ce dernier cas ils représentent avantageusement les groupes méthyle, éthyle, propyle, voire butyle ;
- Hc" représente indépendamment un groupe hydrocarbyle (c'est-à-dire comportant à la fois de l'hydrogène et du carbone) d'au plus 15 atomes de carbone, avantageusement au plus 10 atomes de carbone, de préférence au plus 6, plus préférentiellement au plus 4. Les hydrocarbyles sont notamment choisis parmi les aryles et les alcoyles. Dans ce dernier cas ils représentent avantageusement les groupes méthyle, éthyle, propyle, voire butyle ;

Avantageusement les groupes dihydrocarbylsilylènes présentent au plus 8, de préférence au plus 7, plus préférentiellement au plus 4 atomes de carbone.

Il est souhaitable que les trihydrocarbylsilyles présentent au plus 10, de préférence au plus 9, plus préférentiellement au plus 6 atomes de carbone.

Ces groupes dihydrocarbylsilylènes peuvent constituer un maillon d'un cycle.

Ainsi, parmi les composés donnant de bons résultats l'on peut signaler les composés porteurs de groupes dihydrocarbylsilylènes de formule: 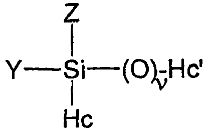 où *v* représente zéro ou 1, avantageusement zéro ;
formule dans laquelle Y représente :
- un groupe amino éventuellement mono ou substitué par un ou deux substituants, identiques ou différents, choisis parmi :
   o les restes d'acides oxygénés (tels que les acides carboxyliques, hydrocarbylsulfuriques, sulfoniques, sulfiniques, phosphoriques et leurs di-et mono-esters, phosphoniques et leurs monoesters, phosphiniques, ...) après élimination d'un groupe hydroxyle, et donnant donc avec Y des amides (amide carboxylique, sulfonique, phosphorique, ...), notamment les acyles (y compris les acides dérivés de l'acide carbonique, tels que les carbamyles) ;
   ο les hydrocarbyles, notamment alcoyles et aryles ;
   ο les trihydrocarbylsilyles ;
   o les groupes ou radicaux de formule 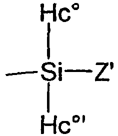 dans laquelle Z', Hc° et Hc°' présentent les mêmes définitions que respectivement Z, Hc et Hc'
- un chalcogène léger (sélénium, soufre ou avantageusement oxygène) porteur d'un substituant choisi parmi :
   o les restes d'acides oxygénés (tels que les acides carboxyliques, hydrocarbylsulfuriques, sulfoniques, sulfiniques, phosphoriques et leurs di-et mono-esters, phosphoniques et leur monoesters, phosphinique, ...) après élimination d'un groupe hydroxyle, et donnant donc avec Y des amides (amide carboxylique, sulfonique, phosphorique, ...), notamment les acyles (y compris les acides dérivés de l'acide carbonique, tels que les carbamyles) ;
   o à la rigueur, les hydrocarbyles, notamment alcoyles et aryles ;
Z est choisi parmi :
- les mêmes valeurs que Y ;
- un hydrocarbyle, notamment alcoyles et aryles ;
- les silanoxanyles ;
- les silazanyles ;
- à la rigueur, les silanyles.
Y et Z peuvent être reliés entre eux pour former un cycle dont le groupe dihydrocarbylsilylène [-(Hc)₂Si-] est un chaînon.
Hc et Hc' ont déjà été définis (voir supra).

Il convient de rappeler que avantageusement les groupes dihydrocarbylsilylènes présentent au plus 8, de préférence au plus 7, plus préférentiellement au plus 4 atomes de carbone.

Il est souhaitable que les trihydrocarbylsilyles présentent au plus 10, de préférence au plus 9, plus préférentiellement au plus 6 atomes de carbone.

Les composés préférés sont des composés azotés, c'est-à-dire dont le groupe dihydrocarbylsilylène est attaché à un atome d'azote, notamment quand Y est azote.

Il est décrit que lorsque l'atome métalloïde relié au groupe dihydrocarbylsilylène est un chalcogène X (chi) (par exemple quand Y est un chalcogène, y compris oxygène), il est souhaitable que l'ensemble du groupe Y relié à l'atome de silicium du groupe dihydrocarbylsilylène constitue un bon groupe partant. Cela peut être indiqué et quantifié en indiquant que lorsque ledit métalloïde est un chalcogène, ce dernier est attaché à un groupe électroattracteur tel que ce groupe électroattracteur (Ea) soit tel que Ea-X-H, et notamment Ea-O-H, soit un acide dont le pKa mesuré dans l'eau est au plus égal à 9, avantageusement à 6, de préférence à 4, plus préférentiellement à 2.

Ceci est particulièrement vrai dans le cas où ledit métalloïde est un oxygène.

La composition selon l'invention est de préférence telle que décrite aux revendications 2 et 3.

Les valeurs de pKa indiquées ci-dessus sont des valeurs correspondant à un arrondi mathématique, c'est-à-dire dans le cas spécifique ci-dessus à une indétermination de 0,5 unité de pKa.

Plus l'acide est fort, en général meilleure est la capacité à silyler. C'est la raison pour laquelle on préfère utiliser comme agent silylant des dérivés d'acides relativement forts.

Lorsque l'agent silylant est un agent dans lequel tous les groupements dihydrocarbylsilylène sont reliés à un chalcogène, il est préférable d'ajouter dans le milieu une base, organique ou minérale afin de neutraliser l'éventuel acide libéré par la réaction, notamment par la déshydratation, base susceptible donc de constituer par salification de former un contre-cation à l'acide engendré.

Ainsi, lorsque ledit métalloïde (notamment Y) est un chalcogène -X- et que ce dernier chalcogène est attaché à un groupe électroattracteur tel que EA-X-H soit un acide dont le pKa mesuré dans l'eau est au plus égal à 8, avantageusement à 6, la composition comporte une base non alcoylable organique ou minérale susceptible de neutraliser ledit acide.

Les bases préférées sont des bases relativement faibles de manière que ces bases n'induisent pas une polycondensation des fonctions isocyanates. Il est en outre hautement préférable que ces bases ne réagissent pas non plus avec les fonctions isocyanates (-NCO). Ainsi est-il préférable que le pKa de l'acide associé à la base soit au plus égal à 12, avantageusement à 11, de préférence à 10.

Les bases préférées sont les amines tertiaires, voire les phosphines tertiaires (sous réserve qu'elles soient molles, les trialcoylphosphines, qui sont elles dures, étant en général des catalyseurs de di- et tri-mérisation) au moins partiellement aromatiques, à savoir mono-,di-, ou tri-aromatiques (mono, di-, ou tri-aryliques).

Il est préférable que dans le cas ci-dessus, c'est-à-dire lorsque l'agent silylant est un ester de silanyle et que l'acide correspondant présente un pKa mesuré dans l'eau au plus égal à 8, avantageusement à 6, la composition comporte une base non alcoylable en quantité au moins égale, exprimée en normalité, à 0,1, avantageusement 0,2, de préférence à 0,5 fois la quantité d'hydrocarbylsilylène greffée sur des fonctions acides définies par le pKa ci-dessus exprimées en équivalents atomes de silicium.

Il est également préférable que cette quantité de base soit au plus égale, exprimée en normalité, à deux fois, avantageusement 1,5 fois, la quantité d'hydrocarbylsilylène telle que définie ci-dessus exprimée en équivalent atome de silicium.

En d'autres termes, il s'agit de neutraliser les éventuelles fonctions acides dégagées par l'agent silylant lors de la silylation intervenant soit sur l'eau, soit sur les produits d'hydrolyse du mélange réactionnel que constitue la composition isocyanate lors d'introduction d'eau ou de solvants ou d'additifs non complètement déshydratés.

Selon la présente invention, la composition isocyanate peut comporter un solvant pour addition successive ou simultanée et présente un intérêt particulier lorsque ce solvant n'est pas complètement déshydraté. La déshydratation intervient lors du mélange et dans la période immédiatement postérieure au mélange. Sont réputés solvants mal déshydratés, les solvants contenant en masse de 0,5‰ à 2% d'eau, surtout de 1‰ à 2%.

L'invention est bien adapté au cas où le rapport massique [eau/(solvant + sous-composition isocyanate)] est compris dans un l'intervalle fermé (c'est-à-dire contenant les bornes) allant de 0,3‰ à 1 %, surtout de 0,5‰ à 1‰.

Bien entendu, la présente invention est particulièrement intéressante dans le cas d'utilisation de solvant hygroscopique et/ou ayant une forte affinité pour l'eau. En particulier les solvants susceptibles de dissoudre en masse (plus exactement d'être miscibles avec) au moins 5%, avantageusement 10% de leur poids en eau.

La composition isocyanate peut également comporter pour addition successive ou simultanée un agent tensioactif, cet agent tensioactif peut notamment être un agent en quantité et en nature tel que la composition isocyanate s'émulsifie lors d'une agitation forte ou légère dans une phase aqueuse.

Parmi les agents tensioactifs particulièrement intéressants, il convient de citer les agents tensioactifs obtenus par greffage sur l'isocyanate par une molécule présentant des groupements poly-oxydes d'alcoylènes, notamment d'éthylène. Cela peut être fait par condensation(s) entre une fonction isocyanate et un polyoxyde d'éthylène dont une au moins des deux extrémités porte une fonction à hydrogène mobile, notamment fonction alcoolique ou amine (comme par exemple les amines de Jefferson, alias jeffamine).

Il convient aussi de citer les condensations entre une, voire plusieurs, fonction(s) isocyanate(s) et des sels d'acides organiques [le cas échéant au moins partiellement sous forme de sel quand on considère la décarboxylation (C3) comme intempestive et que l'on veuille l'éviter] porteurs d'au moins une (et au plus trois) fonction(s) à hydrogène mobile. Comme exemple de tels acides on peut citer les acides alcools et les acides aminés. Les anions correspondants constituent des agents tensioactifs de valeur. Les co-cations sont choisis parmi les mêmes listes que ceux des tensioactifs préférés de formule (I)

Toutefois, mention particulière doit être faite d'agents tensioactifs comportant comme constituant principal, un composé ou mélange de composés de formule générale (I) : 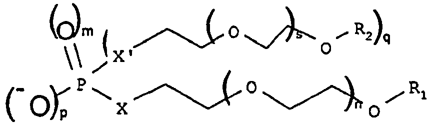 où :
- p représente un entier entre 1 et 2 (intervalles fermés c'est-à-dire comprenant les bornes) ;
- m représente zéro ou avantageusement 1 ;
- la somme p + m + q est au plus égale à 3 ;
- la somme 1 + p + 2m + q est égale à 3 ou 5, avantageusement à 5 ;
- X est un oxygène ou une liaison simple ;
- X' est un oxygène ou une liaison simple ;
- n et s, identiques ou différents, représentent un entier choisi parmi ceux au moins égaux à 2, avantageusement à 3; de préférence à 4, plus préférentiellement à 5 et au plus égaux à 30, avantageusement à 25; de préférence à 20, plus préférentiellement à 9 ; ainsi les intervalles préférés sont entre 3 et 25, avantageusement entre 5 et 20, de préférence entre 5 et 9 (intervalles fermés c'est à dire comprenant les bornes) ;
- où R₁ et R₂, différents ou avantageusement identiques, sont choisis parmi les radicaux de nature aliphatique (c'est-à-dire que leur liaison ouverte est portée par un carbone d'hybridation sp³ de 8 à 20 atomes de carbone) et sans noyau aromatique, éventuellement substitués, avantageusement des alcoyles en excluant les aralcoyles.

R₁ et R₂ représentent le plus souvent un alcoyle, éventuellement et avantageusement ramifié de 8 à 20 atomes de carbone. Il s'agit souvent de mélanges d'alcoyle issus de mélanges d'alcools (en général un mélange d'isomères) tels que le produit vendu sous l'appellation d'alcool isotridécylique.

L'entier q représente donc 1 ou zéro.

Pour s et n un choix dans l'intervalle allant de 9 à 20 peut également être intéressant lorsque les co-cations sont très solubles (alcalins éventuellement séquestrés, ammoniums ou phosphoniums quaternaires, amines tertiaires de bas poids moléculaire, c'est-à-dire d'au plus 7 atomes de carbone), avantageusement l'un des X et X' est oxygène, de préférence les deux sont oxygène. Pour plus de détails sur les co-cations l'on peut se reporter aux passages pertinents de la présente description.

Il est préférable qu'en cas de mélange de composés de formule (I) la majorité d'entre eux en mole réponde à la formule (I) avec "q" valant zéro pour donner la formule (II) : 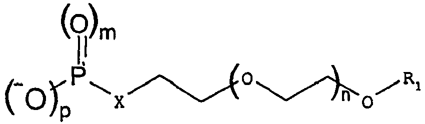 avec :
- "m" étant égal à zéro ou 1, de préférence 1
- "p" valant 2

Lorsque l'on utilise un mélange de composés, comme cela est préféré, les valeurs, qui sont des valeurs entières pour une molécule définie deviennent des valeurs qui peuvent alors être fractionnaires.

Ainsi dans la formule (I) q, p (voire m mais cela n'est pas préféré en raison de difficultés de synthèse, des produits de deux synthèses différentes devant être mélangés : phosphite et phosphate) et surtout n et s deviennent des valeurs statistiques (en nombre bien que cela ne fasse guère de différence, le nombre de molécules de formule (I) pouvant alors aisément être déterminé par pHmétrie, voir ci-dessous).

Le rapport statistique diester sur monoester (c'est-à-dire q) est avantageusement au plus égal à 3/4, avantageusement à 2/3, de préférence à 1/2, et même moins (voir infra).

La composition émulsionnable devient alors une composition émulsionnable d'isocyanate comportant avantageusement :
- une composition isocyanate d'une teneur massique en fonction N=C=O comprise entre 15 et 25% d'une viscosité au plus égale à 2 500 mPa.s, avantageusement à 1 500 mPa.s, de préférence à plus 1 400 mPa.s, préférentiellement 1 200 mPa.s ;
- un agent tensioactif comportant comme constituant principal un composé ou un mélange de composés de formule générale moyenne : 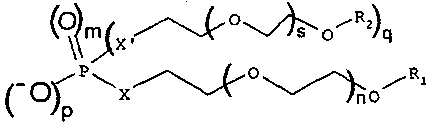 où :
   - p représente une valeur entre 1 et 2 (intervalles fermés c'est-à-dire comprenant les bornes) ;
   - m représente zéro ou 1, avantageusement 1 ;
   - la somme p + m + q est égale à 3 ;
   - la somme 1 + p + 2m + q est égale à la valence du phosphore c'est-à-dire à 3 ou à 5, avantageusement à 5 ;
   - X est un oxygène ;
   - X' est un oxygène ;
   - n et s ont avantageusement la même valeur statistique, n et s, identiques ou différents, représentent une valeur statistique choisie parmi celles au moins égales à 2, avantageusement à 3 ; de préférence à 4, plus préférentiellement à 5 et au plus égales à 30, avantageusement à 25 ; de préférence à 20, plus préférentiellement à 9 ; ainsi les intervalles préférés sont entre 3 et 25, avantageusement entre 5 et 20, de préférence entre 5 et 9 (intervalles fermés c'est à dire comprenant les bornes) ;
   - où R₁ et R₂, différents ou avantageusement identiques, sont choisis parmi les radicaux de nature aliphatique ou araliphatique, éventuellement substitués, avantageusement des alcoyles ou des acyles éventuellement de nature acrylique.

La valeur q représente une valeur choisie dans l'intervalle fermé allant de 0 à1.

Pour s et n, un choix dans l'intervalle allant de 9 à 20 peut également être intéressant lorsque les co-cations sont très solubles (alcalins éventuellement séquestrés, ammoniums ou phosphoniums quaternaires, amines tertiaires de bas poids moléculaire, c'est-à-dire d'au plus 7 atomes de carbone) ; alcoyle est pris dans son sens étymologique d'un alcool dont on a enlevé une fonction OH. R₁ et R₂ représentent le plus souvent un alcoyle, éventuellement et avantageusement ramifié, allant de 8 à 20 atomes de carbone (valeur entière ou statistique), de préférence de 10 à 15 atomes de carbones, plus préférentiellement ne comportant que de l'hydrogène et du carbone il est souhaitable que R₁ et même R₂ soient alkyle au sens de l'IUPAC, c'est-à-dire correspondent à un alcane, éventuellement cyclique, auquel on à enlevé un hydrogène.

Il est à noter que le rapport statistique "q", qui est choisi dans l'intervalle fermé allant de 0 à 1, est aisément déterminé par dosage acido-basique.

Il est souhaitable, alors, que "q" statistique soit au plus égal à 0,5, avantageusement à 0,3, de préférence à 0,2.

Dans ce cas, la formule moyenne est en nombre (nombre total de chaque type de motifs ou d'atomes divisés par le nombre de molécules), les proportions de chaque molécule étant mesurées par chromatographie liquide, le cas échéant, pour les molécules lourdes par perméation de gel.

Ces composés sont susceptibles d'être obtenus par estérification partielle d'acides phosphorés, avantageusement phosphoriques par des polyoxydes d'éthylène (à s et n motif) terminé par une fonction alcool et commencé par un alcool (R₁ et/ou R₂).

Le rapport massique entre d'une part lesdits composés de formule (I) (numérateur) et d'autre part les isocyanates à mettre en suspension, est le plus souvent au plus égal à environ 0,1, avantageusement à 0,10. Dans la présente description, le terme "environ" est employé uniquement pour mettre en exergue le fait que les valeurs données correspondent à un arrondi mathématique et que, lorsque le, ou les, chiffres les plus à droite d'un nombre sont des zéros, ces zéros sont des zéros de position et non des chiffres significatifs, sauf, bien entendu, s'il en est précisé autrement.

Le rapport massique entre les composés de formule (I) (numérateur) et les isocyanates à mettre en suspension (dénominateur) est avantageusement supérieur à 1 %, de préférence à 2%.

Le caractère autoémulsionnable qui constitue un avantage dans ces utilisations apparaît à partir d'un rapport massique d'environ 3% en présence composé émulsifiant d'autres types (eux-mêmes en quantité au moins égale à 3%) et d'environ 5% lorsque les composé de formule (I) représentent au moins 90% en masse de l'ensemble des tensioactifs utilisés comme émulsifiant.

Les co-réactifs utilisés avec l'isocyanate selon l'invention sont souvent mis sur le marché avec leurs propres agents tensioactifs, en sorte que lorsque l'on met la composition isocyanate de l'invention en émulsion dans la phase aqueuse du co-réactif, il peut y avoir auto-émulsion alors que la quantité d'agent tensioactif de formule (I) est insuffisante pour assurer l'auto-émulsion dans de l'eau pure. Selon la présente invention. Cette compatibilité avec les tensioactifs utilisés avec les polyols présente un grand intérêt pour la mise en oeuvre de l'invention.

Il est également souhaitable que la quantité dudit ou desdits composés de formule (I) corresponde à une valeur comprise entre 10⁻² et 1, avantageusement entre 5.10⁻² et 0,5 atome de phosphore par litre.

Ainsi le rapport massique entre, d'une part, les composés de formule (I) (numérateur) et, d'autre part, les isocyanates à mettre en suspension (dénominateur), est avantageusement au moins égal à 2%, de préférence à 4%, et au plus égal à environ 15%, de préférence à 10%, ainsi ce rapport massique est avantageusement compris entre environ 2 et 15%, de préférence entre environ 4% et 10% (2 chiffres significatifs) ; ces intervalles sont fermés c'est-à-dire qu'ils contiennent les bornes).

Selon la présente invention, lesdits composés peuvent être utilisés seuls, ou en mélange, avec un ou plusieurs agents tensioactifs.

Ces éventuels agents tensioactifs peuvent également être choisis parmi d'autres composés ioniques [notamment sulfate ou phosphate d'alcoyle(s) les alcoyl-phosphonate, -phosphinate, sulfonate, sel d'acide gras et/ou zwitterionique] et parmi les composés non-ioniques ceux bloqués en bout de chaîne ou non. Toutefois les composés non ioniques présentant des fonctions alcooliques sur au moins l'une des chaînes semblent avoir un effet légèrement défavorable sur l'(auto)émulsion même s'ils ont un effet favorable sur d'autres aspects de la composition ; compte tenu de cela il est préférable que la teneur en ce type de composé représente au plus 1/3, avantageusement au plus 1/5, de préférence au plus 1/10 en masse desdits composés anioniques selon l'invention.

Le contre-cation (ou les contre-cations) assurant la neutralité électrique des composés anioniques tensioactifs (tels ceux de formule (I)) visés par la présente l'invention est avantageusement monovalent et est choisi parmi les cations minéraux et les cations organiques avantageusement non-nucléophiles et par voie de conséquence de nature quaternaire ou tertiaire [notamment "oniums" de colonne V, tels que phosphoniums, ammoniums (y compris amines protonées), voire de colonne VI, tel que sulfonium, ...] et leurs mélanges, le plus souvent ammoniums, en général issus d'une amine, avantageusement tertiaire. Avantageusement, on évite que le cation organique présente un hydrogène réactif avec la fonction isocyanate. D'où la préférence vis-à-vis des amines tertiaires.

Les cations minéraux peuvent être séquestrés par des agents de transfert de phases comme les éthers couronnes.

Le pKa dans l'eau des cations issu de la protonation des bases neutres (organique [ammonium, ...] ou minéraux) est avantageusement au moins égal à 7, de préférence à 8 et au plus égal à 14, de préférence à 12, plus préférentiellement à 10.

Les cations et notamment les amines correspondant aux ammoniums (amines protonées dans ce cas) ne présentent avantageusement pas de propriété tensioactive mais il est souhaitable qu'elles présentent une bonne solubilité en tout cas suffisante pour assurer celle desdits composés présentant groupement fonctionnel et une chaîne polyoxygénée, en phase aqueuse et ce, à la concentration d'emploi.

Les amines tertiaires, les ammoniums ou phosphoniums quaternaires présentant au plus 16, avantageusement 12 atomes, de préférence au plus 10 atomes, plus préférentiellement au plus 8 atomes de carbone par fonction "onium" (bien évidemment y compris les ammoniums issus d'une amine tertiaire par protonation) sont préférés ; rappelons qu'il est préféré qu'il n'y ait qu'une fonction par molécule.

Les amines tertiaires, les ammoniums ou phosphoniums quaternaires présentant au moins 4, avantageusement au moins 5 atomes, de préférence au moins 6 atomes, plus préférentiellement au moins 7 atomes de carbone par fonction "onium" (bien évidemment y compris les ammoniums issus d'une amine tertiaire par protonation) sont préférés.

Selon ce qui précède, il appert que les bases préférées sont des monoamines, voire les monophosphines, tertiaires présentant de 6 à 10 atomes de carbones, avantageusement de 7 ou 8 atomes de carbone.

Selon la présente invention, il est préféré que l'un des substituants de l'azote, ou du phosphore, soit un radical secondaire, voire tertiaire, avantageusement un cycloalcoyle d'au plus 7 chaînons, avantageusement de 5 ou 6 chaînons.

Les amines peuvent comporter d'autres fonctions et notamment les fonctions correspondant aux fonctions des acides aminés et des fonctions éthers cycliques comme la N-méthylmorpholine, ou non. Ces autres fonctions sont avantageusement sous une forme qui ne réagisse pas avec les fonctions isocyanates et n'altère significativement pas la solubilité en phase aqueuse.

Il est très souhaitable que les composés tensioactifs anioniques, notamment selon la formule (I), soient sous une forme neutralisée telle que le pH qu'elle induit lors d'une dissolution ou d'une mise en contact dans l'eau soit compris au moins égal à 3, avantageusement à 4, de préférence à 5 et au plus égal à 12, avantageusement à 11, de préférence à 10.

Ainsi il est préférable que seules les fonctions acides fortes ou moyennes (c'est-à-dire dont le pKa est au plus égal à 4) soient neutralisées quand il y en a plus d'une. Les acidités faibles, c'est-à-dire dont le pKa est au moins égal à 5, peuvent être partiellement neutralisées.

Comme cela a été mentionné précédemment d'une manière plus générale, il est préférable que les composés où "q" est égal 0 soient largement majoritaires. Ainsi lorsque le phosphore est un phosphore V (c'est-à-dire 2m + p + q = 5) et que les composés du mélange sont esters, il est souhaitable d'utiliser des mélanges de monoester(s) et de diester(s) dans un rapport molaire monoester(s)/diester(s) supérieur à 2, avantageusement à 3, de préférence à 4, plus préférentiellement à 5, voire à 10.

Les agents émulsifiants selon l'invention, notamment les mélanges ci-dessus, peuvent en outre comporter de 1 % jusqu'à environ 20% (il est toutefois préférable que cela ne dépasse pas environ 10%) en masse d'acide phosphorique et/ou acide phosphoreux (qui seront avantageusement salifiés au moins en partie de manière à être dans les zones de pH préconisées) et de 0 à 5% d'esters de l'acide pyrophosphorique. Si techniquement la présence d'acide phosphoreux est possible, certains de ses dérivés, notamment silylés, sont réputés toxiques, il est donc avisé d'éviter cet acide, surtout dans les cas où il risque de se former des dérivés réputés toxiques.

Il convient de signaler que les dérivés tensioactifs anionique, défini ci-dessus, notamment de formule (I), sont susceptibles d'être silylés et le produit silylé entre (si il répond au conditions préconisées dans la présente description) dans la classe des agents silylant. Cela est particulièrement vrai dans le cas des tensioactifs dont la forme acide correspond à un acide moyen ou fort( pKa ≤ 4,5 ; avantageusement à 3, de préférence à 2).

La présente invention peut être réalisée non seulement en ajoutant directement les agents déshydratants à groupes dihydrocarbylsilylènes, voire à groupe(s) hydrocarbyl(hydrocarbyloxy)silylène(s) [-(Hc)(Hc-O-)Si-], à la composition isocyanate, mais aussi en ajoutant l'agent déshydratant et silylant dans le solvant à la solution ou à la composition polyisocyanate. Les solvants qui sont passibles d'un tel traitement sont essentiellement, comme cela a été indiqué ci-dessus, des solvants hygroscopiques et en particulier ceux qui comportent dans leur formule une fonction polaire.

La présente invention vise également l'utilisation de composés porteurs de groupes dihydrocarbylsilylène attachés à un métalloïde de la colonne des chalcogènes ou un atome de la colonne de l'azote comme adjuvant de mélange.

Ces composés porteurs de groupes dihydrocarbylsilylènes sont des composés susceptibles d'agir comme agent silylant et/ou comme agent déshydratant.

Il est à noter que ces composés, notamment les préférés, c'est-à-dire ceux dans lesquels l'atome de silicium est lié à l'atome d'azote, sont des dérivés qui sont connus comme agents de trimérisation capables de former des groupes isocyanurates à partir de fonctions isocyanates. Il est donc particulièrement surprenant que ces composés puissent être utilisés comme adjuvant de mélange sans que cela influe de manière notable sur la stockabilité des compositions isocyanates.

La présente invention vise aussi une phase organique comportant ou constituée de la composition selon la présente invention.

La présente invention vise aussi une phase telle que définie ci-dessus dispersée dans une phase continue aqueuse.

La présente invention vise également l'utilisation telle que définie à la revendication 10.

Les exemples non limitatifs suivants illustrent invention.

### Composition de durcisseurs isocyanates

La composition de durcisseurs isocyanates utilisée dans cette étude est la suivante :
- acétate de méthoxypropyle (AMP) : 55% massique ajouté au dernier moment et entrainant la présence de 500 PPM d'eau ;
- le polyisocyanate hydrophile dont la composition est la suivante :
   - 4.66% phosphate esterifié par un alcool polyéthoxylé : à 13 atomes carbone et 6 Oxydes d'éthylène rapport mono*/di70/30
   - 4.66% phosphate esterifié par un alcool polyéthoxylé : à 8 oxydes d'éthylène// rapport mono*/di70/30 4.66% //4% non ionique
   - diméthyl cyclohexyle amine (DMCHA) : 2.22%
   - QSP 100% composition isocyanate à base d'HDI de basse viscosité et présentant un rapport entre le trimère vrai et la masse totale de 0,6 (arrondi mathèmatique) :
      - NCO 23%
      - Viscosité (CNA) 600mpas
      - poids équivalent 183
      - 100% d'extait sec
      - fonctionnalité 3,25

Le dosage de l'eau (par Karl Fisher) montre que la composition de durcisseur contient en moyenne 0,5‰ en masse.

### Structures des déshydratants

Les déshydratants étudiés sont :
- des structures comparatives oxazoline (Incozol 2 de Industrial Copolymer)
- des structures silylés
   ■ le bistriméthylsilylacétamide (BSA)
   ■ le bistriméthyl silyl urée (BSU)
   ■ l'hexamethyledisilazane (HMDZ)
   ■ le triméthylsilyl phosphate (TMSP)
Les structures chimiques des différents composés ainsi que leurs caractéristiques physiques sont rappelées tableau I.

**Tableau I : caractéristiques des différents déshydratants étudiés**

| Nom du produit | Structure chimique | Masse molaire (g/mol) | Forme physique |
|---|---|---|---|
| Incozol 2 | 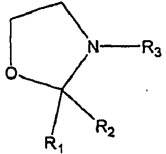 | 114 (eq.molaire) | liquide |
| bistriméthylsilylacétamide (BSA) | 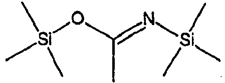 | 203 | liquide |
| bistriméthyl silyl urée (BSU) | 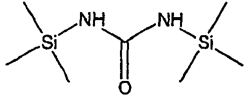 | 204 | poudre |
| hexamethyledisilazane (HMDZ) | 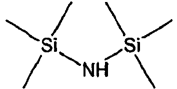 | 161 | liquide |
| triméthylsilyl phosphate (TMSP) | 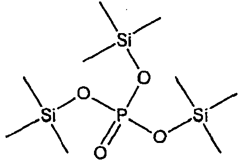 | 314 | poudre |

Tous les produits silylés ont été fournis par Aldrich

### Compositions des mélanges

Le tableau Il ci-dessous donne les compositions des formulations étudiées pour mettre en évidence la performance des différentes structures. Les mélanges 3 à 10 ont été formulés additionnés de déshydratants en prenant en compte les 500 ppm ajoutés lors de l'addition de l'acétate initialement dans le mélange 1 avant rajout d'eau. Dans tous les cas, l'eau additionnée est ajoutée en dernier (i.e. après introduction des déshydratants) de façon à éviter toute réaction avec les fonctions NCO.

Les mélanges 8 et 11 sont passés 30 mn au bain à ultrasons pour assurer la dissolution des produits BSU et TMSP.

### Suivi du dégagement gazeux

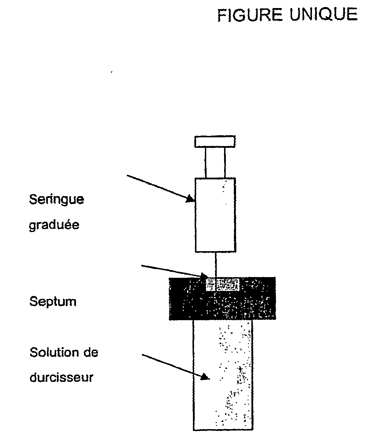

Le suivi du dégagement de gaz en présence ou non des déshydratants a été réalisé en mesurant, à l'aide d'une seringue graduée, le volume de gaz produit par 27 g de solution dans un flacon fermé à l'aide d'un septum, cependant la composition isocyanate est maintenue à 40°C. La mesure est réalisée quotidiennement. Après perforation par la seringue pour quantifier le volume de gaz dégagé, le septum est remplacé par un neuf. Le schéma de la figure annexée décrit le principe.

### Résultats

**Tableau III: formulations isocyanates étudiées**

| **Référence et éléments distinctifs ajouté du mélange en% massique** | | | | | | | **Résultats : existence d'un dégagement gazeux (dé) volume total dégagé mesuré (vd) et observation** | | |
|---|---|---|---|---|---|---|---|---|---|
| Réf. | taux d'eau | Incozol 2 | BSA | BSU | HMDZ | TMSP | **(dé)** | **(Vd)** | **observation du liquide** |
| 1 * | 0,05 | | | | | | non | | Légère turbidité après 21j à 40°C |
| 2* | 0,55 | | | | | | oui | 24 ml après 24h | Formation d'un gel trouble |
| 3* | 0,05 | | 0,568 | | | | non | | Liquide transparent après 21j à 40°C |
| 4* | 0 | | | 0,572 | | | non | | Liquide transparent après 21j à 40°C |
| 5* | 0 | | | | 0,45 | | non | | Liquide transparent après 21j à 40°C |
| 6* | 0 | | | | | 0,588 | non | | Liquide transparent après 21j à 40°C |
| 12 (témoin) | 0,15 | | | | | | oui | 5 ml | Précipité blanc |
| 13 | 0,15 | | 1,558 | | | | non | | Liquide transparent après 21j à 40°C |
| 14 | 0,15 | | | | 1,566 | | non | | Liquide transparent après 21j à 40°C |
| 7* comparatif | 0,55 | 6,97 | | | | | oui | 7,5 ml après 5h | Liquide limpide si stockage à 40°C |
| 8* | 0,55 | | 6,212 | | | | non | | Liquide transparent après 21j à 40°C |

| | | | | | | | | | |
|---|---|---|---|---|---|---|---|---|---|
| • : présent dans le mélange avant rajout d'eau environ 500 ppm | | | | | | | | | |

En ce qui concerne les mélanges 3, 4, 5 et 6, les formulations restent « inchangées » (= liquides incolores sans évolution apparente) et ne présentent aucun dégagement gazeux significatif sur la durée de l'essai de stabilité à 40°C pendant 21 jours.

Le mélange 2 contenant plus de 5000 ppm d'eau quant à lui évolue très vite : au bout de quelques heures seulement à 40°C, un gel chimique légèrement turbide est observé dans le flacon fermé. La mesure du dégagement gazeux montre un fort dégagement de 24 ml au bout de 24h à 40°C. Cette évolution correspond à la réaction attendue des fonctions NCO avec l'eau conduisant à la formation de CO₂.

L'influence des déshydratants testés est clairement mise en évidence au travers des résultats obtenus avec les mélanges, le mélange 7 contenant l'Incozol 2 dégaze au bout de quelques heures à 40°C

On a quantifié davantage la disparition de l'eau des formulations par le suivi dans le temps du taux d'eau dans les formulations 13 et 14 par méthode Karl Fisher.

**Tableau V**

| *Suivi cinétique de la consommation en eau et en fonction NCO des mélanges 13 et 14* | | | | |
|---|---|---|---|---|
| Durée | T de stockage (°C) | Mélange 12 | Mélange 13 | Mélange 14 |
| | | Quantité d'eau en ppm | Quantité d'eau en ppm | Quantité d'eau en ppm |
| t₀ | 23°C | 1500 | 1480 | 1480 |
| | 40°C | | | |
| t=20 min | 23°C | | 650 | 606 |
| | 40°C | | | |
| t= 144h | 23°C | | 63 | 66 |
| | 40°C | | 56 | 19 |

Il apparaît donc clairement que les 2 déshydratants BSA et HMDZ permettent de consommer l'eau présente dans la formulation (poly)isocyanate. Dans le cas du mélange 14, aucun trouble ou gel ne s'est formé. Ce résultat provient vraisemblablement du fait qu'aux quantités d'eau introduites, les dérivés urée formés ne sont pas suffisants pour être détectés à l'oeil.

Les exemples ci-dessus permettent de montrer que certains dérivés silylés peuvent être utilisés efficacement pour déshydrater des formulations (poly)isocyanates sans pour autant générer des volatils. Le composé préféré est indéniablement le Bis triméthyl Silyl Acétamide ou BSA pour lequel aucun dégagement gazeux n'a été détecté dès lors que la quantité de déshydratant introduite est suffisante pour consommer l'eau présente et qui plus est, ne génère aucun composé insoluble.

La BSU et l'HMDZ peuvent également être utilisés comme déshydratants.

Enfin, on peut noter l'intérêt des structures de type oxazolidine, généralement utilisées pour « sécher » des milieux organiques. On remarque toutefois que l'emploi de l'Incozol 2 a conduit en présence d'eau à la formation de COV (cétones ou aldéhydes), et à un gel chimique lorsque le « séchage » de la formulation est conduite à la température ambiante.

## Revendications

1. Composition **caractérisée par le fait qu'**elle comporte pour addition successive ou simultanée:
• une sous-composition isocyanate ne comportant en masse qu'au plus 5%, avantageusement qu'au plus 2%, de préférence qu'au plus 1%, plus préférentiellement au plus 0,5%, de monomères di-isocyanates et de monomères issus d'acide aminés et comportant une teneur en fonction isocyanate au plus égale à 55%,
• **caractérisée par le fait qu'**elle comporte en outre au moins un composé choisi parmi les composés porteurs de groupes dihydrocarbylsilylènes [-(Hc)₂Si-], voire de groupe(s) hydrocarbyl(hydrocarbyloxy)silylène(s) [-(Hc)(Hc-O-)Si-], où Hc représente un groupe comportant de l'hydrogène et du carbone d'au plus 15 atomes de carbone, attachés à un atome d'oxygène, de soufre ou d'azote, la teneur en de tel(s) groupe(s) étant au moins égale à 0,1‰ (massique) et au plus à 3% exprimé en masse d'atome de silicium (M.A. = 28,1) contenu dans un dihydrocarbylsilylène par rapport à la quantité de monomères correspondant aux motifs qui en sont issus.

2. Composition selon la revendication 1, **caractérisée par le fait que** lorsque lesdits groupes sont attachés à un oxygène, ce dernier attaché à un groupe électroattracteur Ea tel que Ea-OH est un acide dont le pKa mesuré dans l'eau est au plus égal 9, avantageusement à 6, de préférence à 4, plus préférentiellement à 2.

3. Composition selon les revendications 1 à 2, **caractérisée par le fait que** lorsque lesdits groupes sont attachés à un oxygènechalcogène -O-, et que ce dernier est attaché à un groupe électroattracteur Ea tel que Ea-OH soit un acide dont le pKa mesuré dans l'eau est au plus égal 8, avantageusement à 6, la composition comporte une base non alcoylable organique ou minérale susceptible de neutraliser ledit acide.

4. Composition selon la revendication 3 **caractérisée par le fait que** la quantité de base est au moins égale en normalité à 0,1, avantageusement 0,2, de préférence à 0,5 fois la quantité de dihydrocarbylsilylène exprimée en équivalent atome silicium.

5. Composition selon les revendications 3 et 4, **caractérisée par le fait que** la quantité de base est au plus égale en normalité, à 2 fois, avantageusement à 1,5 fois la quantité de dihydrocarbylsilylène exprimée en équivalent atome silicium.

6. Composition selon la revendication 1 à 5, **caractérisée par le fait qu'**en outre elle comporte pour addition successive ou simultanée un agent tensioactif.

7. Composition selon la revendication 1 à 76, **caractérisée par le fait qu'**en outre elle comporte, pour addition successive ou simultanée, un solvant.

8. Composition selon la revendication 1 à 7, **caractérisée par le fait qu'**elle comporte en outre un solvant hygroscopique.

9. Composition selon la revendication 1 à 8, **caractérisée par le fait qu'**en outre elle comporte pour addition successive ou simultanée une sous-composition polyfonctionnelle à hydrogène mobile.

10. Utilisation comme adjuvant de composés porteurs de groupes dihydrocarbylsilylène [-(Hc)₂Si-], où Hc représente un groupe comportant de l'hydrogène et du carbone et au plus 15 atomes de carbone, attachés à un atome d'oxygène, de soufre ou d'azote, la teneur en de tels groupes étant au moins égale à 0,1 ‰ (massique) et au plus à 3% exprimé en masse d'atome de silicium (M.A. = 28,1) par rapport à la quantité de monomères correspondant aux motifs qui en sont issus dans une composition isocyanates.

## Patentansprüche

1. Zusammensetzung, die **dadurch gekennzeichnet ist, dass** sie zur sukzessiven oder gleichzeitigen Zugabe umfasst:
• eine Isocyanat-Unterzusammensetzung, die als Masse nur höchstens 5 %, vorteilhafterweise nur höchstens 2 %, vorzugsweise nur höchstens 1 %, bevorzugter höchstens 0,5 % Diisocyanat-Monomere und Monomere, die von Aminosäuren stammen, umfasst und die einen Gehalt an Isocyanatfunktion von höchstens 55 % hat,
• **dadurch gekennzeichnet, dass** sie außerdem wenigstens eine Verbindung, ausgewählt aus Verbindungen, die Träger von Dihydrocarbylsilylen-Gruppen [-(Hc)₂Si-], oder von Hydrocarbyl(hydrocarbyloxy)silylen-Gruppe(n) [-Hc)(Hc-O)-Si-], sind, worin Hc eine Gruppe darstellt, die Wasserstoff und Kohlenstoff mit höchstens 15 Kohlenstoffatomen umfasst, welche an ein Sauerstoff-, Schwefel- oder Stickstoffatom gebunden sind, wobei der Gehalt an derartiger Gruppe (derartigen Gruppen) mindestens gleich 0,1 ‰ (als Masse) und höchstens 3 %, ausgedrückt als Silicium-Atommasse (M.A. = 28,1), enthalten in einem Dihydrocarbylsilylen, bezogen auf die Menge an Monomeren, die den Motiven entsprechen, die daraus hervorgegangen sind, umfasst.

2. Zusammensetzung gemäß Anspruch 1, **dadurch gekennzeichnet, dass**, wenn die Gruppen an einen Sauerstoff gebunden sind, dieser letztgenannte an eine Elektronen-anziehende Gruppe Ea gebunden ist, sodass Ea-OH eine Säure ist, deren pKa, gemessen in Wasser, höchstens gleich 9, vorteilhafterweise 6, vorzugsweise 4, bevorzugter 2 ist.

3. Zusammensetzung gemäß den Ansprüchen 1 bis 2, **dadurch gekennzeichnet, dass**, wenn die Gruppen an ein Sauerstoffchalkogen-O- gebunden sind und dieses letztgenannte an eine Elektronen-anziehende Gruppe Ea gebunden ist, sodass Ea-OH eine Säure ist, deren kPa, gemessen in Wasser, höchstens gleich 8, vorteilhafterweise 6 ist, die Zusammensetzung eine organische oder mineralische nicht-alkylierbare Base umfasst, die geeignet ist, die Säure zu neutralisieren.

4. Zusammensetzung gemäß Anspruch 3, **dadurch gekennzeichnet, dass** die Menge an Base, als Normalität, wenigstens gleich dem 0,1-, vorteilhafterweise dem 0,2-, vorzugsweise dem 0,5-fachen Menge an Dihydrocarbylsilylen, ausgedrückt als Siliciumatomäquivalent, ist.

5. Zusammensetzung gemäß den Ansprüchen 3 und 4, **dadurch gekennzeichnet, dass** die Menge an Base, als Normalität, höchstens gleich dem 2-fachen, vorteilhafterweise dem 1,5-fachen der Menge an Dihydrocarbylsilylen, ausgedrückt als Siliciumatomäquivalent, ist.

6. Zusammensetzung gemäß Anspruch 1 bis 5, **dadurch gekennzeichnet, dass** sie außerdem zur sukzessiven oder gleichzeitigen Zugabe ein grenzflächenaktives Mittel umfasst.

7. Zusammensetzung gemäß Anspruch 1 bis 6, **dadurch gekennzeichnet, dass** sie außerdem zur sukzessiven oder gleichzeitigen Zugabe ein Lösungsmittel umfasst.

8. Zusammensetzung gemäß Anspruch 1 bis 7, **dadurch gekennzeichnet, dass** sie außerdem ein hygroskopisches Lösungsmittel umfasst.

9. Zusammensetzung gemäß Anspruch 1 bis 8, **dadurch gekennzeichnet, dass** sie außerdem zur sukzessiven oder gleichzeitigen Zugabe eine polyfunktionelle Unterzusammensetzung mit mobilem Wasserstoff umfasst.

10. Verwendung von Verbindungen, die Träger von Dihydrocarbylsilylen-Gruppen [-(Hc)₂Si-] sind, worin Hc eine Gruppe darstellt, die Wasserstoff und Kohlenstoff und höchstens 15 Kohlenstoffatome umfasst, welche an ein Sauerstoff-, Schwefel- oder Stickstoff-Atom gebunden sind, sind, wobei der Gehalt an derartigen Gruppen wenigstens gleich 0,1 ‰ (als Masse) und höchstens 3 %, ausgedrückt als Silicium-Atommasse (M.A. = 28,1), bezogen auf die Menge an Monomeren, die den Motiven entsprechen, die daraus entstanden sind, in einer Isocyanatzusammensetzung, als Adjuvans.

## Claims

1. Composition **characterised in that** it comprises the following for successive or simultaneous addition:
• an isocyanate subcomposition only containing 5% by weight at most, advantageously 2% at most, preferably 1% at most, more preferred 0.5% at most, diisocyanate monomers and monomers resulting from amino acids and having a content in relation to isocyanate equal to 55% at most,
• **characterised in that** it additionally comprises a compound chosen from carrier compounds of dihydrocarbylsilylene groups [-(H_{c})₂Si-], and even hydrocarbyl(hydrocarbyloxy)silylene group(s) [-(Hc)(Hc-O-)Si-], where Hc represents a group comprising hydrogen and carbon having 15 carbon atoms at most attached to an oxygen, sulphur or nitrogen atom, wherein the content of such a group or such groups is at least equal to 0.1 ‰ (mass) and at most 3% expressed as silicon atomic mass (AM = 28.1) contained in a dillydrocarbylsilylene relative to the quantity of monomers corresponding to the units resulting therefrom.

2. Composition according to claim 1, **characterised in that** when said groups are attached to an oxygen, the latter is attached to an electron withdrawing group EWG such that EWG-OH is an acid, the pKa of which measured in water is at most equal to 9, advantageously 6, preferably 4 and more preferred 2.

3. Composition according to claims 1 to 2, **characterised in that** when said groups are attached to an oxygen chalcogen -O- and the latter is attached to an electron withdrawing group EWG such that EWG-OH is an acid, the pKa of which measured in water is at most equal to 8, advantageously 6, the composition comprises an organic or mineral non-alkylated base capable of neutralising said acid.

4. Composition according to claim 3, **characterised in that** the quantity of base is in normality at least equal to 0.1, advantageously 0.2, preferably 0.5-times the quantity of dihydrocarbylsilylene expressed as silicon atom equivalent.

5. Composition according to claims 3 and 4, **characterised in that** the quantity of base is in normality at most equal to twice, advantageously 1.5-times the quantity of dihydrocarbylsilylene expressed as silicon atom equivalent.

6. Composition according to claims 1 to 5, **characterised in that** it additionally comprises a surfactant for successive or simultaneous addition.

7. Composition according to claims 1 to 6, **characterised in that** it additionally comprises a solvent for successive or simultaneous addition.

8. Composition according to claims 1 to 7, **characterised in that** it additionally comprises a hygroscopic solvent.

9. Composition according to claims 1 to 8, **characterised in that** it additionally comprises a polyfunctional subcomposition bearing mobile hydrogen for successive or simultaneous addition.

10. Use as adjuvant of carrier compounds of dihydrocarbylsilylene groups [-(H_{c})₂Si-], where Hc represents a group comprising hydrogen and carbon having 15 carbon atoms at most attached to an oxygen, sulphur or nitrogen atom, wherein the content of such groups is at least equal to 0.1‰ (mass) and at most 3% expressed as silicon atomic mass (AM = 28.1) relative to the quantity of monomers corresponding to the units resulting therefrom in an isocyanate composition.
